# EUROPEAN PATENT APPLICATION

(11) **EP 4 564 784 A1**
(43) Date of publication of application: **04.06.2025**
(21) Application number: 23902485.4
(22) Date of filing: 27.11.2023
(51) Int. Cl.: H04L 67/1095

(54) **DATA SYNCHRONIZATION METHOD AND ELECTRONIC DEVICE**

(30) Priority: 14.12.2022 CN 202211608751
(71) Applicant: Huawei Technologies Co., Ltd., Shenzhen, Guangdong 518129 (CN)
(72) Inventor: GONG, Ashi, Shenzhen, Guangdong 518129 (CN); XU, Chao, Shenzhen, Guangdong 518129 (CN); LI, Youfu, Shenzhen, Guangdong 518129 (CN)
(74) Representative: Körber, Martin Hans
(86) International application number: PCT/CN2023/134485
(87) International publication number: WO 2024/125287

(57) **Abstract**

This application provides a data synchronization method and an electronic device, and relates to the field of terminal technologies. In this application, after determining that data of an application is changed, the electronic device sends indication information to another electronic device, to indicate a data status change situation of the application. The another electronic device may perform on-demand data synchronization based on the data status change situation of the application. This effectively reduces power consumption of the data synchronization. The method includes: After determining that data of a first application is changed, a first device records, in a first data status change table, that a data status of the first application has been changed, where the first data status change table is used to record data status change situations of the first application and a second application that are installed on the first device; and then the first device sends the first data status change table to a second device.

## Description

This application claims priority to Chinese Patent Application No. 202211608751.2, filed with the China National Intellectual Property Administration on December 14, 2022 and entitled "DATA SYNCHRONIZATION METHOD AND ELECTRONIC DEVICE", which is incorporated herein by reference in its entirety.

### TECHNICAL FIELD

Embodiments of this application relate to the field of terminal technologies, and in particular, to a data synchronization method and an electronic device.

### BACKGROUND

With development of terminal technologies, electronic devices can establish connections to other electronic devices of a plurality of types, to form a distributed communication system. In the distributed communication system, an electronic device can locally store data of another electronic device to which the electronic device is connected, to implement data synchronization, and ensure data consistency of a plurality of electronic devices.

For example, after an electronic device 1 establishes a communication connection to an electronic device 2, the electronic device 1 may obtain thumbnail data stored in a gallery application of the electronic device 2. In this case, a user may quickly browse the thumbnail data of the electronic device 2 by using the electronic device 1.

Data synchronization requires that a communication connection be first established between different electronic devices, then a data change situation of a peer device is determined based on the communication connection, and then data synchronization is performed. For example, after waking up the peer device and establishing the communication connection to the peer device, the electronic device determines that data of the peer device is not changed, and may determine not to perform data synchronization with the peer device. In this case, the data synchronization is unnecessary data synchronization, causing unnecessary power consumption.

### SUMMARY

To resolve the foregoing technical problem, this application provides a data synchronization method and an electronic device. According to the technical solution provided in this application, after determining that data of an application is changed, the electronic device sends indication information to another electronic device, to indicate a data status change situation of the application. The another electronic device may perform on-demand data synchronization based on the data status change situation of the application. This effectively reduces power consumption of the data synchronization.

To achieve the foregoing technical objective, this application provides the following technical solutions.

According to a first aspect, a data synchronization method is provided, applied to a first device. The method includes: determining that data of a first application is changed; in response to the change of the data of the first application, recording, in a first data status change table, that a data status of the first application has been changed, where the first data status change table is used to record data status change situations of the first application and a second application; and sending the first data status change table to a second device.

Data of the first application or the second application is, for example, device profile file data, bundle manager service data, distributed hardware manager service data, metadata, thumbnail data, calendar data, contact data, notes data, health data, and clipboard data.

In this way, in a case in which no service data is changed, the electronic device does not trigger wake-up, link establishment, or data synchronization with a peer device, but separates the service data from a service data status, and implements data synchronization between different electronic devices by synchronizing a change situation of the service data, to avoid unnecessary power consumption in an implementation process of the data synchronization, and effectively improve performance.

According to the first aspect, the first device stores a propagation record table, and the propagation record table is used to record a sending status of the first data status change table.

According to the first aspect or any one of the implementations of the first aspect, the method further includes: determining that a third device goes online; determining, based on the propagation record table, that the first data status change table is not sent to the third device; and sending the first data status change table to the third device.

In this way, after a new device goes online, the first device can determine, based on a propagation record, whether to send the data status record table to the new device that goes online, to ensure on-demand synchronization of data of different electronic devices in a system.

According to the first aspect or any one of the implementations of the first aspect, the method further includes: determining that the data of the first application is changed, and recording, in a second data status change table, that the data status of the first application has been changed; sending the second data status change table to the second device; determining that a fourth device goes online; determining, based on the sending status of the first data status change table of a first version number and a sending status of the second data status change table of a second version number that are recorded in the propagation record table, that the first data status change table and the second data status change table are not sent to the fourth device; generating a third data status change table based on data status change situations recorded in the first data status change table and the second data status change table; and sending the third data status change table to the fourth device.

In this way, after a new device goes online, the first device integrates the data status change situations recorded in the sent data status change tables, and synchronizes the data status change situations with the new device that is online, to ensure subsequent on-demand data synchronization of the new device.

According to the first aspect or any one of the implementations of the first aspect, the method further includes: determining that the data of the first application is changed, and recording, in a fourth data status change table, that the data status of the first application has been changed; determining that a first period for sending a data status change table does not arrive, and storing the fourth data status change table; determining that the data of the first application is changed, and recording, in a fifth data status change table, that the data status of the first application has been changed; determining that the first period for sending a data status change table has arrived, and integrating the fourth data status change table and the fifth data status change table to generate a sixth data status change table; and sending the sixth data status change table to the second device, and recording a sending status of the sixth data status change table of a third version number in the propagation record table.

In this way, the first device sends the data status change table based on the preset first period, to ensure subsequent data status synchronization between different electronic devices.

According to the first aspect or any one of the implementations of the first aspect, the method further includes: determining that a preset condition is met, and deleting the first data status change table, where the preset condition includes one or more of the following: no data status change table is deleted within preset time, memory usage of a stored data status change table exceeds a preset threshold, and an unsent data status change table indicates that data of all applications in the first device has been changed.

In this way, the first device deletes the data status change table based on the preset condition, to reduce occupation of storage space.

According to the first aspect or any one of the implementations of the first aspect, the first data status change table is a one-dimensional information matrix, and each bit in the first data status change table corresponds to a data status change situation of one application.

According to the first aspect or any one of the implementations of the first aspect, in the first data status change table, a bit with a value of 1 indicates that a data status of a corresponding application has been changed, and a bit with a value of 0 indicates that a data status of a corresponding application is not changed.

According to the first aspect or any one of the implementations of the first aspect, the sending the first data status change table to the second device includes: sending the first data status change table to the second device in a preset manner, where the preset manner includes link establishment, heartbeat broadcast, or discovery broadcast.

According to the first aspect or any one of the implementations of the first aspect, the method further includes: determining that a fifth device goes offline and then goes online again; determining, based on the propagation record table, that the first data status change table and the second data status change table have been sent to the fifth device, and that data is not changed in a time period in which the fifth device goes offline and then goes online again; and determining not to indicate a data status change situation of the first device to the fifth device.

In this way, the first device records the sending status of the data status change table by using the propagation record table, to implement flexible data status synchronization.

According to a second aspect, a data synchronization method is provided, applied to a second device. The method includes: detecting an operation that a user indicates to start a first application, and obtaining a first data status change table corresponding to a first device; determining, based on a data status change situation of the first application that is recorded in the first data status change table, that the first device has been changed data of the first application; sending a data synchronization request to the first device; synchronizing the data of the first application with the first device; and displaying the first application.

In this way, the second device may perform on-demand data synchronization by separating service data from a service data status, and no unnecessary data synchronization is performed.

According to the second aspect, the method further includes: modifying the first data status change table, where a modified first data status change table indicates that the data of the first application has been synchronized.

For example, the second device changes a value of a bit of the first application in the data status change table from 1 to 0, to indicate that the data of the first application has been synchronized. Therefore, the second device does not repeatedly synchronize the data of the first application based on the first data status change table subsequently.

According to the second aspect or any one of the implementations of the second aspect, the method further includes: receiving a second data status change table; and integrating application data change situations of the first device that are indicated in the first data status change table and the second data status change table.

In some examples, after receiving a data status change table sent by one first device, the second device may also update, based on a version number of the latest received data status change table, a historical data status change table that corresponds to the first device and that is stored in the second device.

For example, after synchronizing data based on a data status change table, the second device may set a value of a bit of a service data status corresponding to synchronized service data to 0, and keep a value of a bit of a service data status corresponding to service data on which data synchronization is not performed as 1. Subsequently, after receiving a new data status change table, the second device may integrate the bit that is still set to 1 in the original data status change table into the latest data status change table, and keep a bit whose value is 1 in the latest data status change table as 1.

In this way, the second device may maintain one data status change table, indicating a plurality of received data status change situations, so that storage space occupied by the data status change table is reduced while on-demand data synchronization is implemented.

According to the second aspect or any one of the implementations of the second aspect, the method further includes: receiving a third data status change table; and determining that a version number of the third data status change table is the same as a version number of the second data status change table, and discarding the third data status change table.

In this way, the electronic device may avoid storing a duplicate data status change table based on the version number of the data status change table.

According to the second aspect or any one of the implementations of the second aspect, the method further includes: determining that all changed application data of the first device that is indicated in the first data status change table has been synchronized; and deleting the first data status change table.

In this way, the second device may delete the data status change table in which data synchronization is completed, to reduce occupation of storage space.

According to a third aspect, this application provides an electronic device. The electronic device includes a processor and a memory, and the memory and the processor are coupled. The memory is configured to store computer program code, the computer program code includes computer instructions, and when the processor reads the computer instructions from the memory, the electronic device is enabled to perform: determining that data of a first application is changed; in response to the change of the data of the first application, recording, in a first data status change table, that a data status of the first application has been changed, where the first data status change table is used to record data status change situations of the first application and a second application; and sending the first data status change table to a second device.

According to the third aspect, the first device stores a propagation record table, and the propagation record table is used to record a sending status of the first data status change table.

According to the third aspect or any one of the foregoing implementations of the third aspect, when the processor reads the computer instructions from the memory, the electronic device is further enabled to perform: determining that a third device goes online; determining, based on the propagation record table, that the first data status change table is not sent to the third device; and sending the first data status change table to the third device.

According to the third aspect or any one of the implementations of the third aspect, when the processor reads the computer instructions from the memory, the electronic device is further enabled to perform: determining that the data of the first application is changed, and recording, in a second data status change table, that the data status of the first application has been changed; sending the second data status change table to the second device; determining that a fourth device goes online; determining, based on the sending status of the first data status change table of a first version number and a sending status of the second data status change table of a second version number that are recorded in the propagation record table, that the first data status change table and the second data status change table are not sent to the fourth device; generating a third data status change table based on data status change situations recorded in the first data status change table and the second data status change table; and sending the third data status change table to the fourth device.

According to the third aspect or any one of the implementations of the third aspect, when the processor reads the computer instructions from the memory, the electronic device is further enabled to perform: determining that the data of the first application is changed, and recording, in a fourth data status change table, that the data status of the first application has been changed; determining that a first period for sending a data status change table does not arrive, and storing the fourth data status change table; determining that the data of the first application is changed, and recording, in a fifth data status change table, that the data status of the first application has been changed; determining that the first period for sending a data status change table has arrived, and integrating the fourth data status change table and the fifth data status change table to generate a sixth data status change table; and sending the sixth data status change table to the second device, and recording a sending status of the sixth data status change table of a third version number in the propagation record table.

According to the third aspect or any one of the implementations of the third aspect, when the processor reads the computer instructions from the memory, the electronic device is further enabled to perform: determining that a preset condition is met, and deleting the first data status change table, where the preset condition includes one or more of the following: no data status change table is deleted within preset time, memory usage of a stored data status change table exceeds a preset threshold, and an unsent data status change table indicates that data of all applications in the first device has been changed.

According to the third aspect or any one of the implementations of the third aspect, the first data status change table is a one-dimensional information matrix, and each bit in the first data status change table corresponds to a data status change situation of one application.

According to the third aspect or any one of the implementations of the third aspect, in the first data status change table, a bit with a value of 1 indicates that a data status of a corresponding application has been changed, and a bit with a value of 0 indicates that a data status of a corresponding application is not changed.

According to the third aspect or any one of the implementations of the third aspect, the sending the first data status change table to a second device includes: sending the first data status change table to the second device in a preset manner, where the preset manner includes link establishment, heartbeat broadcast, or discovery broadcast.

According to the third aspect or any one of the foregoing implementations of the third aspect, when the processor reads the computer instructions from the memory, the electronic device is further enabled to perform: determining that a fifth device goes offline and then goes online again; determining, based on the propagation record table, that the first data status change table and the second data status change table have been sent to the fifth device, and that data is not changed in a time period in which the fifth device goes offline and then goes online again; and determining not to indicate a data status change situation of the first device to the fifth device.

For technical effect corresponding to the third aspect and any one of the implementations of the third aspect, refer to technical effect corresponding to the first aspect and any one of the implementations of the first aspect. Details are not described herein again.

According to a fourth aspect, this application provides an electronic device. The electronic device includes a processor, a memory, and a display, and the memory, the display, and the processor are coupled. The memory is configured to store computer program code, the computer program code includes computer instructions, and when the processor reads the computer instructions from the memory, the electronic device is enabled to perform: detecting an operation that a user indicates to start a first application, and obtaining a first data status change table corresponding to a first device; determining, based on a data status change situation of the first application that is recorded in the first data status change table, that the first device has changed data of the first application; sending a data synchronization request to the first device; synchronizing the data of the first application with the first device; and displaying the first application.

According to the fourth aspect, when the processor reads the computer instructions from the memory, the electronic device is further enabled to perform: modifying the first data status change table, where a modified first data status change table indicates that the data of the first application has been synchronized.

According to the fourth aspect or any one of the foregoing implementations of the fourth aspect, when the processor reads the computer instructions from the memory, the electronic device is further enabled to perform: receiving a second data status change table; and integrating application data change situations of the first device that are indicated in the first data status change table and the second data status change table.

According to the fourth aspect or any one of the foregoing implementations of the fourth aspect, when the processor reads the computer instructions from the memory, the electronic device is further enabled to perform: receiving a third data status change table; and determining that a version number of the third data status change table is the same as a version number of the second data status change table, and discarding the third data status change table.

According to the fourth aspect or any one of the foregoing implementations of the fourth aspect, when the processor reads the computer instructions from the memory, the electronic device is further enabled to perform: determining that all changed application data of the first device that is indicated in the first data status change table has been synchronized; and deleting the first data status change table.

For technical effect corresponding to the fourth aspect and any one of the implementations of the fourth aspect, refer to technical effect corresponding to the second aspect and any one of the implementations of the second aspect. Details are not described herein again.

According to a fifth aspect, an embodiment of this application provides a data synchronization system. The system includes a first device and a second device. The first device is configured to: after determining that data of a first application is changed, record, in a first data status change table, that a data status of the first application has been changed, where the first application and a second application are installed on the first device, and the first data status change table is used to record data status change situations of the first application and the second application; and send the first data status change table to the second device. The second device is configured to: receive the first data status change table; and synchronize the data of the first application with the first device based on the first data status change table.

According to the fifth aspect, the second device is further configured to: after detecting an operation that a user indicates to start the first application, obtain the first data status change table, where the first application is installed on the second device; determine, based on the data status change situation of the first application that is recorded in the first data status change table, that the first device has changed the data of the first application; send a data synchronization request to the first device; and after synchronizing the data of the first application with the first device, display the first application.

According to the fifth aspect or any one of the implementations of the fifth aspect, the first device stores a propagation record table, and the propagation record table is used to record a sending status of the first data status change table.

According to the fifth aspect or any one of the implementations of the fifth aspect, the system further includes a third device. The first device is further configured to: determine that the third device goes online; determine, based on the propagation record table, that the first data status change table is not sent to the third device; and send the first data status change table to the third device.

According to the fifth aspect or any one of the implementations of the fifth aspect, the second device is further configured to modify the received first data status change table, where a modified first data status change table indicates that the data of the first application has been synchronized.

For technical effect corresponding to the fifth aspect and any one of the implementations of the fifth aspect, refer to technical effect corresponding to the first aspect and any one of the implementations of the first aspect. Details are not described herein again.

According to a sixth aspect, an embodiment of this application provides an electronic device. The electronic device has a function of implementing the data synchronization method in the first aspect and any one of the possible implementations of the first aspect. The function may be implemented by hardware, or may be implemented by hardware executing corresponding software. The hardware or the software includes one or more modules corresponding to the function.

For technical effect corresponding to the sixth aspect and any one of the implementations of the sixth aspect, refer to technical effect corresponding to the first aspect and any one of the implementations of the first aspect. Details are not described herein again.

According to a seventh aspect, an embodiment of this application provides an electronic device. The electronic device has a function of implementing the data synchronization method in the second aspect and any one of the possible implementations of the second aspect. The function may be implemented by hardware, or may be implemented by hardware executing corresponding software. The hardware or the software includes one or more modules corresponding to the function.

For technical effect corresponding to the seventh aspect and any one of the implementations of the seventh aspect, refer to technical effect corresponding to the second aspect and any one of the implementations of the second aspect. Details are not described herein again.

According to an eighth aspect, a computer-readable storage medium is provided. The computer-readable storage medium stores a computer program (which may also be referred to as instructions or code). When the computer program is executed by an electronic device, the electronic device is enabled to perform the method in the first aspect or any one of the implementations of the first aspect, or the electronic device is enabled to perform the method in the second aspect or any one of the implementations of the second aspect.

For technical effect corresponding to the eighth aspect and any one of the implementations of the eighth aspect, refer to technical effect corresponding to the first aspect and any one of the implementations of the first aspect. Details are not described herein again.

According to a ninth aspect, an embodiment of this application provides a computer program product. When the computer program product runs on an electronic device, the electronic device is enabled to perform the method in the first aspect or any one of the implementations of the first aspect, or the electronic device is enabled to perform the method in the second aspect or any one of the implementations of the second aspect.

For technical effect corresponding to the ninth aspect and any one of the implementations of the ninth aspect, refer to technical effect corresponding to the first aspect and any one of the implementations of the first aspect. Details are not described herein again.

According to a tenth aspect, an embodiment of this application provides a circuit system. The circuit system includes a processing circuit, and the processing circuit is configured to perform the method in the first aspect or any one of the implementations of the first aspect; or the processing circuit is configured to perform the method in the second aspect or any one of the implementations of the second aspect.

For technical effect corresponding to the tenth aspect and any one of the implementations of the tenth aspect, refer to technical effect corresponding to the first aspect and any one of the implementations of the first aspect. Details are not described herein again.

According to an eleventh aspect, an embodiment of this application provides a chip system, including at least one processor and at least one interface circuit. The at least one interface circuit is configured to perform receiving and sending functions, and send instructions to the at least one processor. When the at least one processor executes the instructions, the at least one processor performs the method in the first aspect or any one of the implementations of the first aspect, or the at least one processor performs the method in the second aspect or any one of the implementations of the second aspect.

For technical effect corresponding to the eleventh aspect and any one of the implementations of the eleventh aspect, refer to technical effect corresponding to the first aspect and any one of the implementations of the first aspect. Details are not described herein again.

### BRIEF DESCRIPTION OF DRAWINGS

FIG. 1 is a diagram of a communication system to which a data synchronization method is applied according to an embodiment of this application;
FIG. 2A is a diagram of a hardware structure of a first electronic device according to an embodiment of this application;
FIG. 2B is a block diagram of a software structure of a first electronic device according to an embodiment of this application;
FIG. 3 is a diagram of a format of a packet according to an embodiment of this application;
FIG. 4 is a diagram 1 of a scenario according to an embodiment of this application;
FIG. 5 is a diagram 2 of a scenario according to an embodiment of this application;
FIG. 6 is a diagram 3 of a scenario according to an embodiment of this application;
FIG. 7 is a schematic flowchart of a data synchronization method according to an embodiment of this application;
FIG. 8 is a diagram of a structure of a first device according to an embodiment of this application; and
FIG. 9 is a diagram of a structure of a second device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended for a purpose of describing specific embodiments, but are not intended to limit this application. The terms "one", "a", "the foregoing", "the", and "this" of singular forms used in this specification and the appended claims of this application are also intended to include a form such as "one or more", unless otherwise specified in the context clearly. It should be further understood that in the following embodiments of this application, "at least one" and "one or more" mean one, two, or more.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but is not limited to", unless otherwise specifically emphasized. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

In some scenarios, a super device can implement collaborative management and resource sharing of a plurality of devices. For example, after a mobile phone collaborates with a nearby device, for example, a tablet, a computer, or a smart screen, the super device may be formed. In this case, a user may continue a current task of another device on a collaborative device in the super device, for example, the user can continue to watch, on the smart screen, a video that is being played on the mobile phone, or continue to edit, on the computer, a file that is being edited on the mobile phone. To implement the foregoing function of the super device, different electronic devices need to maintain multi-end data consistency through data synchronization.

In some examples, after determining that data is changed, the electronic device pushes changed data to another electronic device in a communication system, to implement data consistency between different electronic devices.

However, in the foregoing solution, after receiving the changed data sent by the source electronic device and completing data synchronization, the another electronic device may not use synchronized data. In this case, the data synchronization is unnecessary data synchronization, wasting resources.

In some other examples, the electronic device requests on-demand synchronization with another electronic device in the communication system, to reduce unnecessary data synchronization.

For example, the electronic device enables a wireless local area network (wireless local area networks, WLAN) function, a Bluetooth function, and the like, and another electronic device may find the electronic device, and determine that the electronic device goes online. Then, different electronic devices may perform on-demand system data synchronization to form the super device. The system data includes, for example, bundle manager service (bundle manager service, BMS) data, device profile file (device profile, DP) data, and distributed hardware manager service (distributed hardware manager service, DHMS) data.

For another example, in the super device, after detecting an operation that the user indicates to start an application A, the electronic device may wake up the peer device, to pull data (for example, pull data) of the application A in the peer device, and display the application A after completing data synchronization. In this way, the user may view synchronized data of the application A on the electronic device. The application A includes, for example, a plurality of applications such as a schedule application, a contact application, and a notes application. The peer device is, for example, one or more other electronic devices other than the electronic device to be synchronized in the super device. For example, the smart screen pulls data of a video application in the mobile phone in response to an operation that the user indicates to start the video application, to continue playing, on the smart screen, a video that is being played on the mobile phone.

For another example, in the super device, after detecting an operation that the user indicates to start a gallery application, the electronic device may request, from the peer device, to obtain metadata and thumbnail data that are stored in the peer device, and display the gallery application after determining that synchronization of changed metadata and thumbnail data of the peer device is completed. In this way, the user may view synchronized data of the gallery application on the electronic device.

In some embodiments, if the electronic device needs to perform data synchronization with the peer electronic device, a link needs to be established first. Then, the electronic device performs data exchange with the peer device based on the established link, to determine whether data of the peer device is changed. If the data is changed, data synchronization may be performed.

However, in some scenarios, after waking up the peer device, establishing the link to the peer device, and performing data interaction, the electronic device determines that data of the peer device is not changed and data synchronization is not required. Therefore, in the foregoing process, unnecessary power consumption is caused, and performance of the electronic device is reduced.

For example, after going online, the electronic device continuously wakes up the peer device, to synchronize a plurality of types of system data. However, the system data of the peer device is not changed. As a result, the electronic device wakes up the peer device for a plurality of times, and data synchronization does not need to be performed. Consequently, unnecessary power consumption is caused.

For another example, in response to a user operation, the electronic device starts the application A, and wakes up the peer device to pull changed data of the device Ain the peer device. However, the data of the application A in the peer device is not changed, and data synchronization does not need to be performed. This causes unnecessary power consumption.

For another example, in response to the user operation, the electronic device starts the gallery application, wakes up the peer device, and establishes the link to the peer device. The peer device needs to be always in a standby state, and waits for the electronic device to request to obtain changed metadata and thumbnail data. However, the metadata and the thumbnail data of the peer device are not changed, and unnecessary power consumption is caused.

Therefore, an embodiment of this application provides a data synchronization method. After determining that data is changed, a first electronic device synchronizes a changed data status to a second electronic device, so that the second electronic device may perform on-demand data synchronization. Therefore, unnecessary data synchronization is not caused, and power consumption of data synchronization can be effectively reduced, to improve performance.

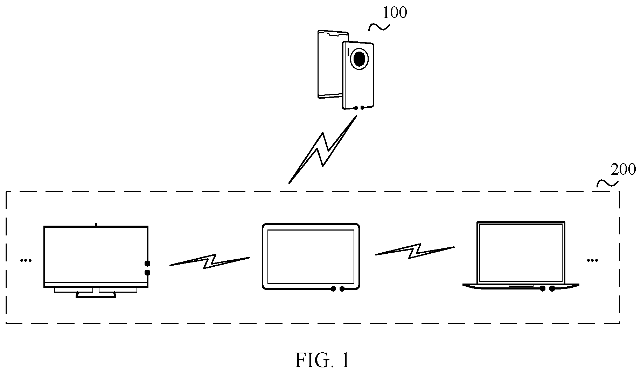

FIG. 1 is a diagram of a communication system to which a data synchronization method is applied according to an embodiment of this application. As shown in FIG. 1, the communication system includes a first electronic device 100 and a second electronic device 200.

Optionally, the first electronic device 100 or the second electronic device 200 may be, for example, a terminal device like a mobile phone, a tablet computer, a notebook computer, a smart screen, a wearable device, an in-vehicle terminal, an ultra-mobile personal computer (ultra-mobile personal computer, UMPC), a netbook, a personal digital assistant (personal digital assistant, PDA), or an artificial intelligence (artificial intelligence, AI) device. An operating system installed on the first electronic device 100 or the second electronic device 200 includes but is not limited to iOS^{®}, Android^{®}, HarmonyOS^{®}, Windows^{®}, Linux^{®}, or another operating system. A specific type of the first electronic device 100 or the second electronic device 200 and an operating system installed on the first electronic device 100 or the second electronic device 200 are not limited in this application.

In some embodiments, a wireless communication connection is established between the first electronic device 100 and the second electronic device 200. A wireless communication technology for establishing a wireless communication connection includes but is not limited to at least one of the following: Bluetooth (Bluetooth, BT) (for example, conventional Bluetooth or Bluetooth low energy (Bluetooth low energy, BLE) Bluetooth), a wireless local area network (wireless local area network, WLAN) (for example, a wireless fidelity (wireless fidelity, Wi-Fi) network), near field communication (near field communication, NFC), Zigbee (Zigbee), frequency modulation (frequency modulation, FM), infrared (infrared, IR), and the like.

Optionally, a communication connection may alternatively be established between the first electronic device 100 and the second electronic device 200 through a third-party device in a local area network. The third-party device is, for example, a router, a gateway, a smart device controller, or a server.

In some embodiments, the first electronic device 100 is a device having changed data, and the first electronic device 100 maintains a data status change table used to record a data status change. The first electronic device 100 sends the data status change table to the second electronic device 200, and the second electronic device 200 may determine, based on the data status change table, whether to perform synchronization of changed data. In this way, on-demand data synchronization between electronic devices is implemented, and unnecessary power consumption is avoided.

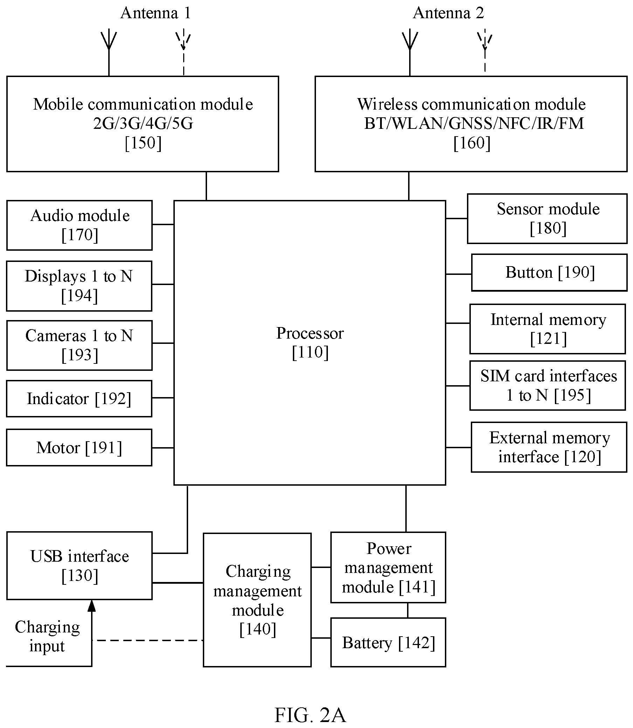

Optionally, the first electronic device 100 and the second electronic device 200 in embodiments of this application may be implemented by using different devices, and different devices may have same, similar, or different hardware structures, for example, a hardware structure shown in FIG. 2A.

For example, an example in which the first electronic device 100 has the hardware structure shown in FIG. 2A is used to describe the hardware structure shown in FIG. 2A.

For example, FIG. 2A is a diagram of a structure of a first electronic device 100.

The first electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identification module (subscriber identification module, SIM) card interface 195, and the like.

It may be understood that a structure shown in this embodiment of this application does not constitute a specific limitation on the first electronic device 100. In some other embodiments of this application, the first electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor, a charger, a flash, the camera 193, and the like by using different I2C bus interfaces. For example, the processor 110 may be coupled to the touch sensor through the I2C interface, so that the processor 110 communicates with the touch sensor through the I2C bus interface, to implement a touch function of the first electronic device 100.

The MIPI may be configured to connect the processor 110 to a peripheral component, for example, the display 194 or the camera 193. The MIPI includes a camera serial interface (camera serial interface, CSI), a display serial interface (display serial interface, DSI), and the like. In some embodiments, the processor 110 communicates with the camera 193 through the CSI, to implement a photographing function of the first electronic device 100. The processor 110 communicates with the display 194 through the DSI, to implement a display function of the first electronic device 100.

The USB interface 130 is an interface that conforms to a USB standard specification, and may be specifically a mini USB interface, a micro USB interface, a USB type-C interface, or the like. The USB interface 130 may be configured to connect to the charger to charge the first electronic device 100, or may be configured to transmit data between the first electronic device 100 and a peripheral device, or may be configured to connect to a headset, to play an audio through the headset. The interface may be further configured to connect to another first electronic device, for example, an AR device.

It may be understood that, an interface connection relationship between the modules shown in this embodiment of this application is merely an example for description, and does not constitute a structural limitation on the first electronic device 100. In some other embodiments of this application, the first electronic device 100 may alternatively use an interface connection mode different from that in the foregoing embodiment, or use a combination of a plurality of interface connection modes.

The charging management module 140 is configured to receive a charging input from a charger. The charger may be a wireless charger, or may be a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the first electronic device 100. The charging management module 140 may further supply power to the first electronic device through the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the first electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the first electronic device 100 may be configured to cover one or more communication bands. Different antennas may also be multiplexed to improve antenna utilization. For example, the antenna 1 may be multiplexed as a diversity antenna of a wireless local area network. In some other embodiments, the antenna may be used in combination with a tuning switch.

The mobile communication module 150 can provide a wireless communication solution that is applied to the first electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal through an audio device, or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the first electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the first electronic device 100, the antenna 1 and the mobile communication module 150 are coupled, and the antenna 2 and the wireless communication module 160 are coupled, so that the first electronic device 100 can communicate with a network and another device by using the wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The first electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, or the like. The display 194 includes a display panel. The display panel may be made of a liquid crystal display (liquid crystal display, LCD), for example, an organic light-emitting diode (organic light-emitting diode, OLED), an active-matrix organic light emitting diode (active-matrix organic light-emitting diode, AMOLED), a flexible light-emitting diode (flexible light-emitting diode, FLED), a mini-LED, a micro-LED, a micro-OLED, or quantum dot light-emitting diodes (quantum dot light-emitting diodes, QLED). In some embodiments, the first electronic device 100 may include one or N displays 194, where N is a positive integer greater than 1.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the first electronic device 100 may include one or N cameras 193, where N is a positive integer greater than 1.

The external memory interface 120 may be configured to connect to an external memory card, for example, a micro SD card, to expand a storage capability of the first electronic device 100. The external memory card communicates with the processor 110 through the external memory interface 120, to implement a data storage function, for example, store files such as music and a video in the external memory card.

The internal memory 121 may be configured to store computer-executable program code, and the computer-executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) and the like created in a process of using the first electronic device 100. In addition, the internal memory 121 may include a high-speed random access memory, or may include a nonvolatile memory, for example, at least one magnetic disk storage device, a flash storage device, or a universal flash storage (universal flash storage, UFS). The processor 110 runs instructions stored in the internal memory 121 and/or instructions stored in a memory disposed in the processor, to perform various function applications of the first electronic device 100 and data processing.

In some embodiments, the first electronic device 100 determines that changed data exists, for example, determines that system data is changed, and then may update, by using the processor 110, a data status change table stored in the internal memory 121. In addition, the first electronic device 100 may send an updated data status change table to the second electronic device 200 by using the wireless communication module 160, so that the second electronic device 200 subsequently synchronizes, on demand, data that has been changed by the first electronic device 100 and that is indicated in the data status change table.

The audio module 170 is configured to convert digital audio information into an analog audio signal for output, and is also configured to convert an analog audio input into a digital audio signal. The audio module 170 may be further configured to: encode and decode an audio signal. In some embodiments, the audio module 170 may be disposed in the processor 110, or some functional modules of the audio module 170 are disposed in the processor 110. The first electronic device 100 may use the audio module 170 to implement music playing, recording, and the like. The audio module 170 may include a speaker, a receiver, a microphone, a headset jack, an application processor, and the like.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The first electronic device 100 may receive a button input, and generate a button signal input related to a user setting and function control of the first electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card. The first electronic device 100 may support one or N SIM card interfaces, where N is a positive integer greater than 1.

A software system of the first electronic device 100 or the second electronic device 200 may use a layered architecture, an event-driven architecture, a microkernel architecture, a microservice architecture, or a cloud architecture. In embodiments of this application, an Android system with a layered architecture is used as an example to describe a software structure of the first electronic device 100 or the second electronic device 200.

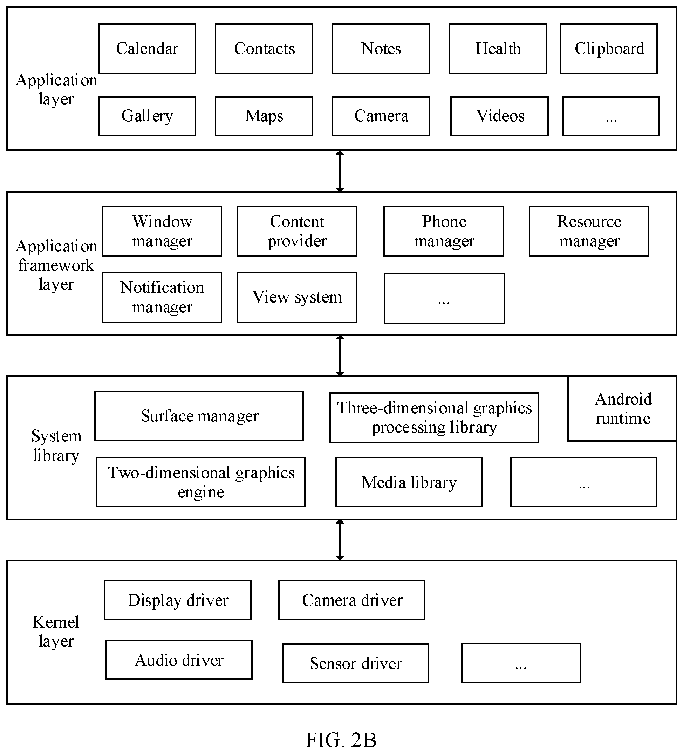

FIG. 2B is a block diagram of a software structure of the first electronic device 100 according to an embodiment of this application. The second electronic device 200 may have a same, similar, or different software structure.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2B, the application package may include applications such as Calendar, Contacts, Notes, Health, Clipboard, Gallery, Maps, Camera, and Videos.

The application framework layer provides an application programming interface (application programming interface, API) and a programming framework for applications at the application layer. The application framework layer includes some predefined functions.

As shown in FIG. 2B, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and received, a browsing history, a bookmark, an address book, and the like.

The view system includes visual controls such as a control for displaying a text and a control for displaying an image. The view system may be configured to construct an application. A display interface may include one or more views. For example, a display interface including an SMS notification icon may include a text display view and an image display view.

The phone manager is configured to provide a communication function for the first electronic device 100, for example, management of a call status (including answering, declining, or the like).

The resource manager provides, for the application, various resources like a localized character string, an icon, an image, a layout file, and a video file.

The notification manager enables the application to display notification information in the status bar, and may be configured to convey a notification type message, which may automatically disappear after a short stay without user interaction. The notification manager may alternatively be a notification that appears in a top status bar of the system in a form of a graph or a scroll bar text.

The Android runtime includes a core library and a virtual machine. The Android runtime is responsible for scheduling and management of the Android system.

The core library includes two parts: a function that needs to be called in a Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

The following describes, with reference to a calendar data synchronization scenario, an example of a working procedure of software and hardware of the first electronic device 100 and the second electronic device 200.

In the first electronic device 100, when the touch sensor receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap touch operation, and the control corresponding to the single-tap operation is a control of a calendar application icon. The calendar application invokes an interface of the application framework layer to start the calendar application. Then, in a process of displaying the calendar application, the first electronic device 100 detects, by using the touch sensor, a touch operation of the user on the calendar application, determines that data of the calendar application is changed, and may generate a data status change table by using the processor 110. The data status change table indicates a change of a data status of the calendar application. Then, the first electronic device 100 may send the data status change table to the second electronic device 200 by using the wireless communication module 160.

Correspondingly, the second electronic device 200 may obtain the data status change table sent by the first electronic device 100, and store the data status change table by using the internal memory. Subsequently, the second electronic device 200 detects a touch operation of the user by using the touch sensor, and sends an interrupt of the touch operation to the kernel layer, to generate a corresponding input event and send the input event to the application framework layer. The application framework layer identifies the input event, and determines that the user indicates to start the calendar application. In this case, the second electronic device 200 may obtain the data status change table stored in the internal memory, and determine whether to perform data synchronization. For example, if the second electronic device 200 determines, based on the data status change table, that the data status of the calendar application of the first electronic device 100 has been changed, the second electronic device 200 may determine to synchronize the data of the calendar application with the first electronic device 100. In this case, the second electronic device 200 may send a data synchronization request to the first electronic device 100, to synchronize the data of the calendar application. After the data of the calendar application is synchronized, the second electronic device 200 may start and display the calendar application.

In some embodiments, a communication system includes a plurality of electronic devices, and different electronic devices may include service data of a same type or different types. In this case, all types of service data in the communication system are unified into the data status change table, to record a change situation of service data of each electronic device in the communication system. In this way, the first electronic device 100 whose data is changed in the communication system may update the data change situation to the data status change table. The second electronic device 200 in the communication system may determine the data change situation of the first electronic device 100 by synchronizing the data status change table, to perform on-demand data synchronization.

Optionally, the service data includes, for example, system data and application data. For example, the system data includes DP data, BMS data, and DHMS data. For example, the application data includes metadata, thumbnail data, calendar data, contact data, notes data, health data, and clipboard data.

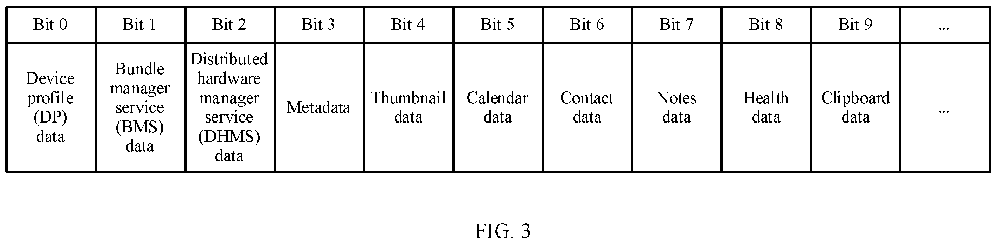

Optionally, the data status change table is a one-dimensional information matrix, and the data status change table is transmitted between electronic devices in a form of packet. For example, FIG. 3 shows a format of the packet, where each bit (bit) corresponds to a data status of one type of service data. After determining that one or more types of service data are changed, the first electronic device 100 may set a bit corresponding to the changed service data to 1, to indicate that a data status of the corresponding service data has been changed. In this way, after obtaining the data status change table subsequently, the second electronic device 200 may determine the change situation of the service data of the first electronic device 100 based on a value of each bit.

In some examples, different types of data may correspond to different applications. After changing data of an application, the first electronic device may determine that a data status of the application is changed. Then, the first electronic device may mark a data status change situation of the corresponding application by using the data status change table. For example, the data status change situation includes that the data status of the application is changed, or the data status of the application is not changed.

As described above, the data status change table indicates a change situation of the service data, and the change situation includes whether a data status of the service data is changed. If a value of a bit is 1, it indicates that a data status corresponding to a peer device is changed, and corresponding service data has been changed. If the value of the bit is 0, it indicates that the data status corresponding to the peer device is not changed, and the corresponding service data is not changed. In some other examples, a field may be further added to the data status change table to indicate a specific change situation of service data whose data status is changed, for example, deletion, addition, modification, or a changed data size of the service data.

For example, as shown in Table 1, the first electronic device 100 is a device A. After the DP data and the contact data are changed, as shown in FIG. 3, the device A determines that a data status of the DP data corresponds to a bit 0 in the data status change table, and a data status of the contact data corresponds to a bit 6 in the data status change table. In this case, as shown in Table 1, the device A sets the bit 0 and the bit 6 to 1, and generates a data status change table.

**Table 1**

| Device number | Bit 0 | Bit 1 | Bit 2 | Bit 3 | Bit 4 | Bit 5 | Bit 6 | Bit 7 | Bit 8 | Bit 9 | ... |
|---|---|---|---|---|---|---|---|---|---|---|---|
| Device A | 1 | | | | | | 1 | | | | ... |

For example, as shown in Table 2, the first electronic device 100 is a device B. After the BMS data and the contact data are changed, as shown in FIG. 3, the device B determines that a data status of the BMS data corresponds to a bit 1 in the data status change table, and a data status of the contact data corresponds to a bit 6 in the data status change table. In this case, as shown in Table 2, the device B sets the bit 1 and the bit 6 to 1, and generates a data status change table.

**Table 2**

| Device number | Bit 0 | Bit 1 | Bit 2 | Bit 3 | Bit 4 | Bit 5 | Bit 6 | Bit 7 | Bit 8 | Bit 9 | ... |
|---|---|---|---|---|---|---|---|---|---|---|---|
| Device B | | 1 | | | | | 1 | | | | ... |

In some embodiments, the first electronic device 100 sends the data status change table to the second electronic device 200 in a preset manner. Optionally, the preset manner includes, for example, one or more of link establishment, heartbeat broadcast, discovery broadcast, and the like.

For example, after determining that the service data is changed, and updating the data status change table, the first electronic device 100 establishes a link to the second electronic device 200. Then, the first electronic device 100 sends the data status change table to the second electronic device 200 based on the link between the first electronic device 100 and the second electronic device 200.

For another example, the first electronic device 100 and the second electronic device 200 access a same local area network, and the first electronic device 100 sends a heartbeat broadcast signal to the second electronic device 200 based on a heartbeat mechanism according to a preset rule. For example, the first electronic device 100 periodically sends the heartbeat broadcast signal. After determining that the service data is changed, and updating the data status change table, the first electronic device 100 may add the data status change table to a corresponding heartbeat broadcast signal. Correspondingly, the second electronic device 200 may determine, based on the received heartbeat broadcast signal, that the status of the service data of the first electronic device 100 has been changed. Optionally, the first electronic device 100 may separately send a broadcast signal used to carry the data status change table. This is not limited in embodiments of this application.

For another example, the first electronic device 100 and the second electronic device 200 support a proximity discovery function. After the second electronic device 200 approaches the first electronic device 100, the first electronic device 100 may discover the second electronic device 200. In this case, the first electronic device 100 may send the data status change table to the second electronic device 200 discovered nearby.

For example, based on the scenarios shown in Table 1 and Table 2, the second electronic device 200 is, for example, a device C. In this case, as shown in Table 3, the device C may obtain data status change tables sent by the device A and the device B in the preset manner, and store the data status change tables. Subsequently, the device C may perform on-demand data synchronization based on the stored data status change tables.

For example, based on Table 3, the device C determines to synchronize the DP data with the device A, and synchronize the BMS data with the device B. In this way, the device C does not need to establish links to the device B and the device C to determine whether data of the device B and the device C is changed, and whether to perform data synchronization. The device C can directly determine, based on the data status change tables, data that needs to be synchronized and data that does not need to be synchronized. This reduces unnecessary power consumption.

**Table 3**

| Device number | Bit 0 | Bit 1 | Bit 2 | Bit 3 | Bit 4 | Bit 5 | Bit 6 | Bit 7 | Bit 8 | Bit 9 | ... |
|---|---|---|---|---|---|---|---|---|---|---|---|
| Device A | 1 | | | | | | 1 | | | | ... |
| Device B | | 1 | | | | | 1 | | | | |

In this way, after determining that the service data is changed, the first electronic device 100 may send the data status change table to the second electronic device 200 in a plurality of preset manners, to synchronize a changed data status of the service data. In this way, the second electronic device 200 does not need to perform data synchronization in a manner of first establishing the link and then determining whether changed data exists in the first electronic device 100, but can directly determine the data change situation of the first electronic device 100 based on the obtained data status change table, to perform on-demand data synchronization. This effectively reduces power consumption.

In some embodiments, a corresponding version number is configured for the data status change table generated and sent by the first electronic device 100. In comparison with a data status change table of a previous version number, a data status change table of a next version number records a latest change situation of the service data of the first electronic device 100 in a time period between the two data status change tables.

For example, after determining that the data is changed, the first electronic device 100 generates a data status change table 1, records a version number of the data status change table 1 as a version number 0001, and then sends the data status change table 1. Subsequently, after determining that the data is changed again, the first electronic device 100 generates a data status change table 2 for the data change situation, records a version number of the data status change table 2 as a version number 0002, and then sends the data status change table 2.

For another example, the preset manner in which the first electronic device 100 sends the data status change table to the second electronic device 200 is the heartbeat broadcast. After determining that the data is changed, the first electronic device 100 generates a data status change table A (for example, a value of a bit 0 is set to 1), determines that a sending period for the heartbeat broadcast does not arrive currently, and may not send the data status change table A temporarily. Then, after determining that the data is changed, the first electronic device 100 generates a data status change table B (for example, a value of a bit 1 is set to 1), determines that the sending period for the heartbeat broadcast does not arrive currently, and may not send the data status change table B temporarily. Then, after determining that the data is changed, the first electronic device 100 generates a data status change table C (for example, a value of a bit 2 is set to 1), and determines that the sending period for the heartbeat broadcast has arrived. In this case, the first electronic device 100 may integrate unsent data status change tables such as the data status change table A, the data status change table B, and the data status change table C to generate a data status change table 1 (for example, values of the bit 0, the bit 1, and the bit 2 are set to 1), generate a version number 0001 of the data status change table 1, and then send the data status change table 1. In other words, after determining to send the data status change table, the first electronic device 100 may generate a corresponding version number, to determine a sending status of the data status change table based on a change of the version number.

Subsequently, after determining that the data is changed, the first electronic device 100 generates a data status change table 2 (for example, a value of the bit 0 is set to 1). When determining that the sending period for the heartbeat broadcast has arrived, the first electronic device 100 may determine that a version number of the data status change table 2 is a version number 0002, and send the data status change table 2.

It should be noted that each time after determining that the data is changed, the first electronic device 100 may generate a corresponding data status change table, and determine a corresponding version number. Then, when determining that the data status change table can be sent, the first electronic device 100 may integrate data status change tables that are of a plurality of version numbers and that are not sent to generate a new data status change table, generate a new version number, and send the data status change table.

In addition, the first electronic device 100 may alternatively generate and send a corresponding data status change table (for example, the preset manner is the link establishment or the discovery broadcast) each time after determining that data is changed. In this case, the first electronic device 100 may not need to generate a version number corresponding to the data status change table, but directly record the generated data status change table by using a name, sending time, or the like of the data status change table.

In some embodiments, the first electronic device 100 may further delete the data status change table, to reduce occupation of the storage space.

For example, the first electronic device 100 may delete a historical data status change table based on a preset period. For example, the first electronic device 100 deletes the historical data status change table once every week (or every month, every quarter, or the like). The historical data status change table is, for example, a data status change table of one or more versions that is stored in the first electronic device 100 and has been sent in the preset manner. Therefore, after the second electronic device 200 that is not online for more than one week goes online, the first electronic device 100 may directly perform full data synchronization with the second electronic device 200.

For another example, after determining that values of all bits in the data status change table may be set to 1, the first electronic device 100 may delete the historical data status change table. For example, each time the first electronic device 100 determines that the data is changed, the first electronic device 100 generates a corresponding data status change table, but fails to send the data status change table in the preset manner within a specific time period. In this case, the first electronic device 100 determines, based on one or more generated data status change tables, that after integration, values of all bits in a corresponding data status change table may be set to 1. In this case, the first electronic device 100 may integrate these data status change tables into one data status change table (values of all bits in the data status change table are set to 1), and clear historical data status change tables (for example, including a sent data status change table and an unsent data status change table).

For another example, a storage space occupation threshold is preset. After the stored data status change table exceeds the storage space occupation threshold, the first electronic device 100 may delete the historical data status change table.

In some embodiments, after receiving a data status change table sent by one first electronic device 100, the second electronic device 200 may also update, based on a version number of the latest received data status change table, a historical data status change table that corresponds to the first electronic device 100 and that is stored in the second electronic device 200.

For example, after synchronizing data based on the data status change table, the second electronic device 200 may set a value of a bit of a service data status corresponding to synchronized service data to 0, and keep a value of a bit of a service data status corresponding to service data on which data synchronization is not performed as 1. Subsequently, after receiving a new data status change table, the second electronic device 200 may integrate the bit that is still set to 1 in the original data status change table into the latest data status change table, and keep a bit whose value is 1 in the latest data status change table as 1.

For example, a value of a bit in the latest received data status change table is 0, and a value of the bit in the previous data status change table is 1. The second electronic device 200 sets the value of the bit to 1 in the integrated data status change table. For another example, a value of a bit in the latest received data status change table is 1, and a value of the bit in the previous data status change table is 0. The second electronic device 200 sets the value of the bit to 1 in the integrated data status change table. For another example, a value of a bit in the latest received data status change table is 0, and a value of the bit in the previous data status change table is 0. The second electronic device 200 sets the value of the bit to 0 in the integrated data status change table. For another example, a value of a bit in the latest received data status change table is 1, and a value of the bit in the previous data status change table is 1. The second electronic device 200 sets the value of the bit to 1 in the integrated data status change table.

Optionally, after performing data synchronization with a first electronic device 100 based on a data status change table, the second electronic device 200 determines that all bits in the data status change table corresponding to the first electronic device 100 are set to 0. In this case, the second electronic device 200 may delete the data status change table. Subsequently, the second electronic device 200 may receive a latest data status change table sent by the first electronic device 100, and perform on-demand synchronization based on the latest received data status change table.

It should be understood that a time sequence of data status change tables of a first electronic device 100 may be distinguished in another manner. For example, the data status change table is marked in a manner like a timestamp. This is not specifically limited in embodiments of this application.

In some embodiments, for different first electronic devices 100, service data of a same type may be changed. In this case, after receiving the data status change table, the second electronic device 200 may synchronize corresponding service data based on data status change tables corresponding to different first electronic devices 100.

For example, as shown in Table 3, the device C separately obtains the data status change tables sent by the device A and the device B, where the contact data of both the device A and the device B is changed. In an example scenario, the device C detects an operation that the user indicates to start the contact application, obtains a stored data status change table, and determines that an electronic device whose contact data is changed exists in the stored data status change table. For example, as shown in the content in Table 3, if the device C determines that the contact data of both the device A and the device B is changed, the device C may request the device A to synchronize the contact data in the device A, and request the device B to synchronize the contact data in the device B. Then, the device C may display the contact application in which contact data is synchronized.

In this way, the second electronic device 200 synchronously changes latest service data based on a data status recorded in the data status change table, to ensure data consistency between electronic devices in the communication system.

In some embodiments, in a process of sending the data status change table, the first electronic device 100 may record, by using a propagation record table, the second electronic device 200 that receives the data status change table. In this way, after an electronic device in the communication system changes subsequently, the first electronic device 100 may determine whether to send the data status change table again.

For example, in the propagation record table shown in Table 4, a value of a version number is, for example, 0000 to 1111, and a column in which an electronic device to which a data status change table is sent is located may be used to record an identifier, a device name, a device nickname, and the like of the electronic device that has received the data status change table corresponding to the version number. As shown in the following Table 4, the first electronic device 100 is a device A. The device A generates a data status change table whose version number is 0000, sends the data status change table to the device B and the device C, and may record a sending status of the data status change table in the propagation record table.

**Table 4**

| Version number | Electronic device to which a data status change table is sent |
|---|---|
| 0000 | Device B and device C |
| 0001 | Device B |
| 0002 | Device B |
| ... | ... |

In some examples, after clearing the historical data status change table, the first electronic device 100 may also delete a corresponding propagation record from the propagation record table, to reduce occupation of the storage space.

For example, the first electronic device 100 deletes the data status change table whose version number is 0000. In this case, as shown in Table 4, the first electronic device 100 may delete a propagation record in a row in which the version number is 0000.

The following examples are several scenarios in which the first electronic device 100 sends the data status change table based on the propagation record table.

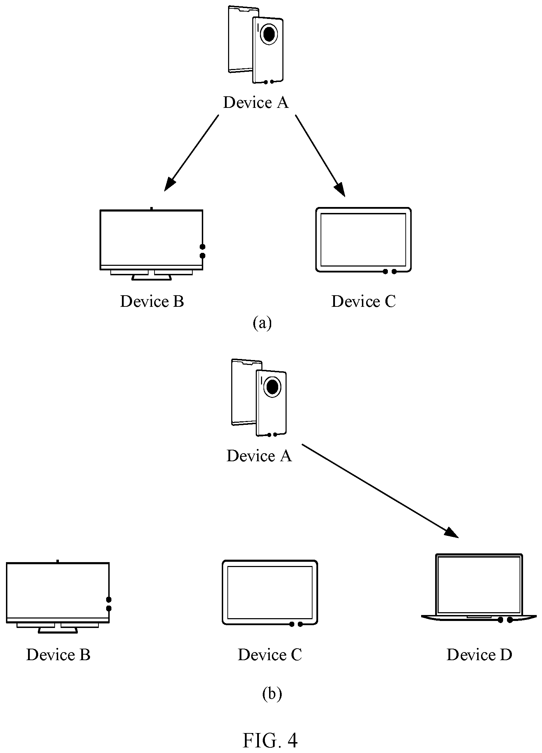

For example, as shown in (a) in FIG. 4, the first electronic device 100 is the device A, and the device A determines that service data is changed, and generates a data status change table. Then, the device A sends the data status change table to the second electronic device 200 (for example, the device B and the device C) in a preset manner, and records, by using the propagation record table, that the data status change table has been sent to the device B and the device C. Correspondingly, after receiving the data status change table, the device B and the device C synchronize data on demand.

Subsequently, as shown in (b) in FIG. 4, a device D accesses a scenario in which the device A, the device B, and the device C are located in a local area network. The device A determines that the device D goes online, and may send the data status change table to the device D, and also add the device D to the data propagation record table.

Optionally, the device A may separately send the data status change table to the device D. For example, the device A sends the data status change table to the device D in a link establishment manner. Alternatively, the device A sends the data status change table in a broadcast manner. Correspondingly, the device B, the device C, and the device D may all receive the broadcast, and determine to obtain the data status change table. The device B and the device C may determine, based on the version number of the data status change table, that the data status change table has been received before, and may choose to discard or not receive the data status change table.

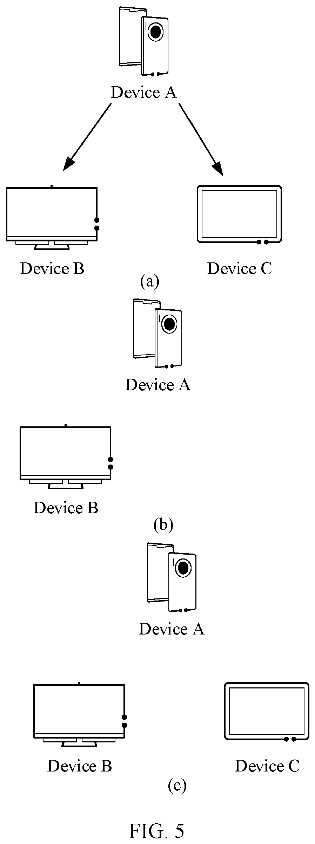

For another example, as shown in (a) in FIG. 5, the first electronic device 100 is the device A, and the device A determines that the service data is changed, and generates a data status change table. Then, the device A sends the data status change table to the second electronic device 200 (for example, the device B and the device C) in a preset manner, and records, by using the propagation record table, that the data status change table has been sent to the device B and the device C. Correspondingly, after receiving the data status change table, the device B and the device C synchronize data on demand.

Subsequently, as shown in (b) in FIG. 5, the device C goes offline. In addition, the device A may determine that the device C goes offline.

Subsequently, as shown in (c) in FIG. 5, the device C goes online. The device A determines, based on the propagation record table, that the latest data status change table has been sent to the device C. In other words, the service data of the device A is not changed from time when the device C goes offline to time when the device C goes online again. In this case, the device A may determine not to send the data status change table to the device C that newly goes online.

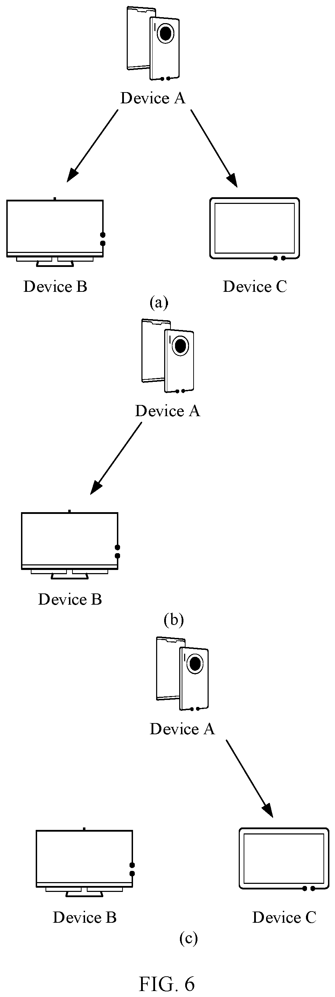

For another example, as shown in (a) in FIG. 6, the first electronic device 100 is the device A, and the device A determines that the service data is changed, and generates a data status change table 1. Then, the device A sends the data status change table 1 to the second electronic device 200 (for example, the device B and the device C) in a preset manner, and records, by using the propagation record table, that the data status change table 1 has been sent to the device B and the device C. Correspondingly, after receiving the data status change table 1, the device B and the device C synchronize data on demand.

Subsequently, as shown in (b) in FIG. 6, the device C goes offline. The device A determines that the service data is changed, and generates a data status change table 2. The data status change table 2 in the device A may cover the data status change table 1. Then, the device A sends the data status change table 2 to the device B in a preset manner, and records, by using the propagation record table, that the data status change table 2 has been sent to the device B. Correspondingly, after receiving the data status change table 2, the device B synchronizes data on demand.

Optionally, the device B may update the data status change table 1 based on the data status change table 2. For example, the device B receives the data status change table 1 that is sent by the device A and that is shown in the foregoing Table 1. The device B may determine that the DP data (the bit 0) and the contact data (the bit 6) in the device A are changed, and the device B determines not to synchronize the two pieces of changed data temporarily. Subsequently, the device B receives the data status change table 2 that is sent by the device A and that is shown in Table 5, and the device B may determine that calendar data (a bit 5) in the device A is changed. In addition, the device B may update the data status change table 1 based on the data status change table 2, and integrate bits corresponding to unsynchronized service data statuses in the two data status change tables, to facilitate subsequent data synchronization between the device B and the device A. For example, the device B may generate, based on the data status change table 1 shown in Table 1 and the data status change table 2 shown in Table 5, a data status change table shown in Table 6. Subsequently, the device B may synchronize the DP data (the bit 0), the contact data (the bit 6), and the calendar data (the bit 5) on demand based on the data status change table.

Alternatively, after receiving the data status change table 1 shown in the foregoing Table 1, the device B determines to synchronize the DP data based on the value 1 of the bit 0 in the data status change table. After synchronizing the DP data, the device B may set a value of the bit 0 corresponding to the DP data in the data status change table 1 to 0. In addition, if the device B does not detect an operation that the user indicates to start the contact application, the device B may temporarily not change the contact data. Subsequently, the device B receives the data status change table 2 that is sent by the device A and that is shown in Table 5, and the device B may determine that the calendar data (the bit 5) in the device A is changed. In addition, the device B may update the data status change table 1 based on the data status change table 2, and integrate bits corresponding to unsynchronized service data statuses in the two data status change tables, to facilitate subsequent data synchronization between the device B and the device A. For example, the device B may generate a data status change table shown in Table 7 based on the data status change table 1 shown in Table 1, a synchronization status (for example, a status in which the bit 0 in the data status change table 1 is already set to 0) that is of the DP data and that corresponds to the data status change table 1, and the data status change table 2 shown in Table 5. Subsequently, the device B may synchronize the contact data (the bit 6) and the calendar data (the bit 5) on demand based on the data status change table.

**Table 5**

| Device number | Bit 0 | Bit 1 | Bit 2 | Bit 3 | Bit 4 | Bit 5 | Bit 6 | Bit 7 | Bit 8 | Bit 9 | ... |
|---|---|---|---|---|---|---|---|---|---|---|---|
| Device A | | | | | | 1 | | | | | ... |

**Table 6**

| Device number | Bit 0 | Bit 1 | Bit 2 | Bit 3 | Bit 4 | Bit 5 | Bit 6 | Bit 7 | Bit 8 | Bit 9 | ... |
|---|---|---|---|---|---|---|---|---|---|---|---|
| Device A | 1 | | | | | 1 | 1 | | | | ... |

**Table 7**

| Device number | Bit 0 | Bit 1 | Bit 2 | Bit 3 | Bit 4 | Bit 5 | Bit 6 | Bit 7 | Bit 8 | Bit 9 | ... |
|---|---|---|---|---|---|---|---|---|---|---|---|
| Device A | | | | | | 1 | 1 | | | | ... |

Optionally, in a process of updating the historical data status change table based on the newly received data status change table, the device B (namely, the second electronic device 200) may also generate an update record, used to record an update status of the data status change table. Alternatively, the device B (namely, the second electronic device 200) may also store a plurality of data status change tables, and then delete a data status change table after determining that all to-be-synchronized service data in the data status change table is synchronized.

After the scenario shown in (b) in FIG. 6, as shown in (c) in FIG. 6, the device C goes online. The device A determines, based on the propagation record table, that the latest data status change table 2 is not sent to the device C. In other words, the service data of the device A is changed from time when the device C goes offline to time when the device C goes online again. In this case, the device A may determine to perform data synchronization, and then the device A sends the data status change table 2 to the device C that newly goes online.

Optionally, the propagation record table may record a data status change table of a version number, and a status of a propagated electronic device. In this case, for example, the device A determines, based on the propagation record table, that a plurality of service data changes exist in the device A in the time period from the time when the device C goes offline to the time when the device C goes online again, that is, the device A has generated and sent data status change tables of a plurality of version numbers to another electronic device. In this case, the device A may generate a new data status change table based on the plurality of service data changes, and send the data status change table to the device C, to synchronize data between the device A and the device C.

In this way, in a case in which no service data is changed, the electronic device does not trigger wake-up, link establishment, or data synchronization with a peer device, but separates the service data from a service data status, and implements data synchronization between different electronic devices by synchronizing a change situation of the service data, to avoid unnecessary power consumption in an implementation process of the data synchronization, and effectively improve performance.

In addition, the electronic device may perform on-demand data synchronization by separating the service data from the service data status, and no unnecessary data synchronization is performed.

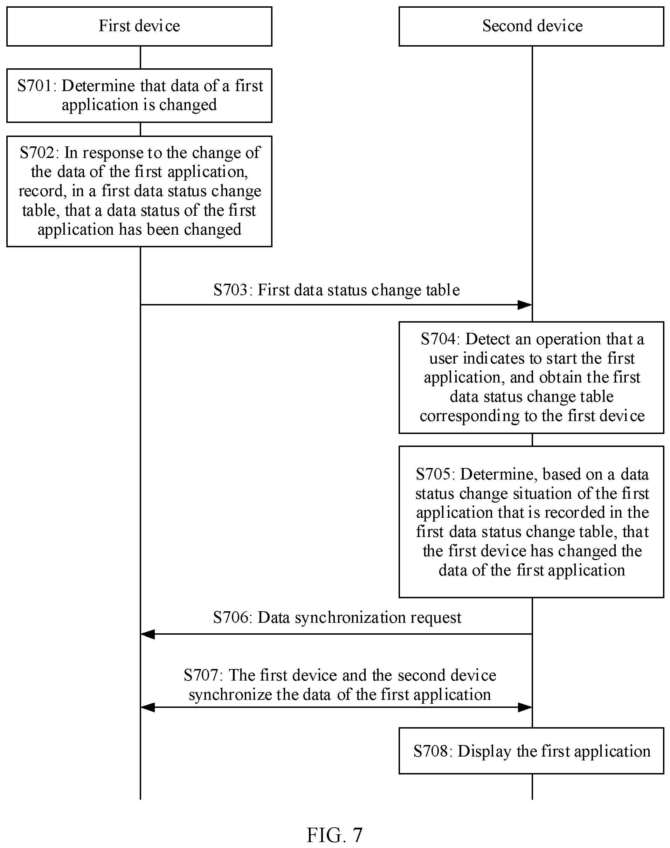

For example, FIG. 7 is a schematic flowchart of a data synchronization method according to an embodiment of this application. The method includes the following steps.

S701: A first device determines that data of a first application is changed.

The first application and a second application are installed on the first device. Data of the first application or the second application is, for example, DP data, BMS data, DHMS data, metadata, thumbnail data, calendar data, contact data, notes data, health data, and clipboard data.

For example, in a process of displaying the first application (for example, a calendar application), the first device detects an operation of editing a schedule by a user, and determines that data of the calendar application is changed.

S702: In response to the change of the data of the first application, record, in a first data status change table, that a data status of the first application has been changed.

The first data status change table is used to record data status change situations of the first application and the second application.

In some embodiments, the first data status change table is a one-dimensional information matrix, and each bit in the first data status change table corresponds to a data status change situation of one application. For example, in the first data status change table, a bit with a value of 1 indicates that a data status of a corresponding application has been changed, and a bit with a value of 0 indicates that a data status of a corresponding application is not changed.

For example, as shown in FIG. 3, each bit corresponds to a data status of one type of service data, and data types of data of different applications are different. After determining that data of one or more applications is changed, the first device may set a bit corresponding to the application whose data is changed to 1, to indicate that a data status of the application has been changed. In this way, after obtaining the data status change table subsequently, a second device may determine a change situation of application data of the first device based on a value of each bit.

S703: The first device sends the first data status change table to the second device.

In some embodiments, the first device sends the first data status change table to the second device in a preset manner, where the preset manner includes link establishment, heartbeat broadcast, or discovery broadcast.

In some embodiments, the first device stores a propagation record table, and the propagation record table is used to record a sending status of the first data status change table.

For example, after sending the first data status change table to the second device, the first device records, in the propagation record table, that the first data status change table has been sent to the second device. Subsequently, the first device determines that a third device goes online, and determines, based on the propagation record table, that the first data status change table is not sent to the third device. In this case, the first device may send the first data status change table to the third device.

For another example, after sending the first data status change table to the second device, the first device determines that the data of the first application is changed, and records, in a second data status change table, that the data status of the first application has been changed. The first device sends the second data status change table to the second device. Subsequently, after determining that a fourth device goes online, the first device determines, based on the sending status of the first data status change table of a first version number and a sending status of the second data status change table of a second version number that are recorded in the propagation record table, that the first data status change table and the second data status change table are not sent to the fourth device. In this case, the first device generates a third data status change table based on data status change situations recorded in the first data status change table and the second data status change table, and then the first device sends the third data status change table to the fourth device.

In this way, after a new device goes online, the first device integrates the data status change situations recorded in the sent data status change tables, and synchronizes the data status change situations with the new device that is online, to ensure subsequent on-demand data synchronization of the new device.

For another example, after sending the first data status change table to the second device, the first device determines that the data of the first application is changed, and records, in a fourth data status change table, that the data status of the first application has been changed. The first device sends the data status change table in a heartbeat broadcast manner. If the first device determines that a first period for sending a data status change table does not arrive, the first device may store the fourth data status change table. Then, the first device determines that the data of the first application is changed, and records, in a fifth data status change table, that the data status of the first application has been changed. If the first device determines that the first period for sending a data status change table has arrived, the first device may integrate the fourth data status change table and the fifth data status change table to generate a sixth data status change table. The first device sends the sixth data status change table to the second device, and records a sending status of the sixth data status change table of a third version number in the propagation record table. In other words, after determining to send the data status change table, the first device may generate a corresponding version number, to determine a sending status of the data status change table based on a change of the version number.

In this way, the first device sends the data status change table based on the preset first period, to ensure subsequent data status synchronization between different electronic devices.

For another example, the first device determines that a fifth device goes offline and then goes online again. The first device determines, based on the propagation record table, that the first data status change table and the second data status change table have been sent to the fifth device, and the first device does not change application data in a time period in which the fifth device goes offline and then goes online again. In this case, the first device may determine not to indicate a data status change situation of the first device to the fifth device.

In this way, the first device records the sending status of the data status change table by using the propagation record table, to implement flexible data status synchronization.

In some embodiments, the first device determines that a preset condition is met, and deletes the first data status change table. The preset condition includes one or more of the following: No data status change table is deleted within preset time, memory usage of a stored data status change table exceeds a preset threshold, and an unsent data status change table indicates that data of all applications in the first device has been changed.

In this way, the first device deletes the data status change table based on the preset condition, to reduce occupation of storage space.

S704: The second device detects an operation that the user indicates to start the first application, and obtains the first data status change table corresponding to the first device.

In some embodiments, after obtaining the data status change table, the second device may first store the data status change table. Subsequently, the second device may perform on-demand data synchronization based on the data status change table.

S705: The second device determines, based on the data status change situation of the first application that is recorded in the first data status change table, that the first device has changed the data of the first application.

For example, the second device may synchronize the data of the first application in response to the operation that the user indicates to start the first application. For example, if the second device determines, based on the stored first data status change table, that the data of the first application in the first device is changed, the second device may determine to request the first device to synchronize the data of the first application.

S706: The second device sends a data synchronization request to the first device.

In some embodiments, after determining that the second device needs to synchronize the data of the first application with the first device, the second device may send the data synchronization request to the first device. Correspondingly, the first device receives the data synchronization request sent by the second device.

S707: The first device and the second device synchronize the data of the first application.

In some embodiments, after receiving the data synchronization request, the first device further determines an application for which data is requested to be synchronized in the data synchronization request. If the data synchronization request carries an identifier of the first application, the first device may synchronize the data of the first application with the second device based on the identifier.

S708: The second device displays the first application.

In some embodiments, after determining that synchronization of the data of the first application is completed, the second device may display the first application. Subsequently, after determining, in response to a user operation, to change the data of the first application, the second device may further generate and send a corresponding data status change table, so that another electronic device may synchronize the data of the first application on demand.

In some embodiments, after determining that synchronization of the data of the first application is completed, the second device may modify the first data status change table, where a modified first data status change table indicates that the data of the first application has been synchronized.

For example, the second device changes a value of a bit of the first application in the data status change table from 1 to 0, to indicate that the data of the first application has been synchronized. Therefore, the second device does not repeatedly synchronize the data of the first application based on the first data status change table subsequently.

In some embodiments, the second device receives the second data status change table sent by the first device. Then, the second device may integrate application data change situations of the first device that are indicated in the first data status change table and the second data status change table.

In some examples, after receiving a data status change table sent by one first device, the second device may also update, based on a version number of the latest received data status change table, a historical data status change table that corresponds to the first device and that is stored in the second device.

For example, after synchronizing data based on a data status change table, the second device may set a value of a bit of a service data status corresponding to synchronized service data to 0, and keep a value of a bit of a service data status corresponding to service data on which data synchronization is not performed as 1. Subsequently, after receiving a new data status change table, the second device may integrate the bit that is still set to 1 in the original data status change table into the latest data status change table, and keep a bit whose value is 1 in the latest data status change table as 1.

In this way, the second device may maintain one data status change table, indicating a plurality of received data status change situations, so that storage space occupied by the data status change table is reduced while on-demand data synchronization is implemented.

In some embodiments, the second device receives the third data status change table sent by the first device. The second device determines that a version number of the third data status change table is the same as a version number of the previously received second data status change table sent by the first device, and discards the third data status change table.

In this way, the electronic device may avoid storing a duplicate data status change table based on the version number of the data status change table.

In some embodiments, the second device determines that all changed application data of the first device that is indicated in the first data status change table has been synchronized. Then, the second device may delete the first data status change table.

In this way, in a case in which no service data is changed, the electronic device does not trigger wake-up, link establishment, or data synchronization with a peer device, but separates the service data from a service data status, and implements data synchronization between different electronic devices by synchronizing a change situation of the service data, to avoid unnecessary power consumption in an implementation process of the data synchronization, and effectively improve performance.

In addition, the electronic device may perform on-demand data synchronization by separating the service data from the service data status, and no unnecessary data synchronization is performed.

In addition, the first device may further perform steps and functions performed by the first electronic device 100 in the foregoing embodiments, and the second device may further perform steps and functions performed by the second electronic device 200 in the foregoing embodiments, to implement the data synchronization method provided in the foregoing embodiments.

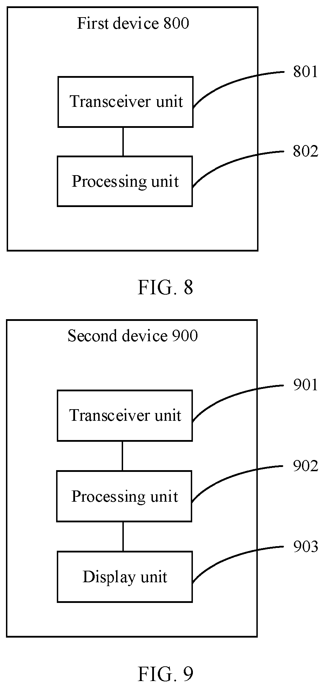

The foregoing describes in detail the data synchronization method provided in embodiments of this application with reference to FIG. 3 to FIG. 7. The following describes in detail the first device and the second device provided in embodiments of this application with reference to FIG. 8 and FIG. 9.

In a possible design, FIG. 8 is a diagram of a structure of a first device according to an embodiment of this application. As shown in FIG. 8, a first device 800 may include a transceiver unit 801 and a processing unit 802. The first device 800 may be configured to implement functions of the first electronic device 100 in the foregoing method embodiments.

Optionally, the transceiver unit 801 is configured to support the first device 800 to perform S703, S706, and S707 in FIG. 7.

Optionally, the processing unit 802 is configured to support the first device 800 to perform S701, S702, and S707 in FIG. 7.

The transceiver unit may include a receiving unit and a sending unit, may be implemented by a transceiver or a transceiver-related circuit component, and may be a transceiver or a transceiver module. Operations and/or functions of the units in the first device 800 are separately intended to implement corresponding procedures of the data synchronization method in the foregoing method embodiments. All related content of the steps in the foregoing method embodiments may be referenced to function descriptions of corresponding functional units. For brevity, details are not described herein again.

Optionally, the first device 800 shown in FIG. 8 may further include a storage unit (not shown in FIG. 8), and the storage unit stores a program or instructions. When the transceiver unit 801 and the processing unit 802 execute the program or the instructions, the first device 800 shown in FIG. 8 is enabled to perform the data synchronization method in the foregoing method embodiments.

For technical effect of the first device 800 shown in FIG. 8, refer to the technical effect of the data synchronization method in the foregoing method embodiments. Details are not described herein again.

In addition to a form of the first device 800, the technical solutions provided in this application may also be a functional unit or a chip in the first device, or an apparatus that is matched with the first device for use.

In a possible design, FIG. 9 is a diagram of a structure of a second device according to an embodiment of this application. As shown in FIG. 9, a second device 900 may include a transceiver unit 901, a processing unit 902, and a display unit 903. The second device 900 may be configured to implement functions of the second electronic device 200 in the foregoing method embodiments.

Optionally, the transceiver unit 901 is configured to support the second device 900 to perform S703, S704, S706, and S707 in FIG. 7.

Optionally, the processing unit 902 is configured to support the second device 900 to perform S704, S705, and S707 in FIG. 7.

Optionally, the display unit 903 is configured to support the second device 900 to perform S708 in FIG. 7.

The transceiver unit may include a receiving unit and a sending unit, may be implemented by a transceiver or a transceiver-related circuit component, and may be a transceiver or a transceiver module. Operations and/or functions of the units in the second device 900 are separately intended to implement corresponding procedures of the data synchronization method in the foregoing method embodiments. All related content of the steps in the foregoing method embodiments may be referenced to function descriptions of corresponding functional units. For brevity, details are not described herein again.

Optionally, the second device 900 shown in FIG. 9 may further include a storage unit (not shown in FIG. 9), and the storage unit stores a program or instructions. When the transceiver unit 901, the processing unit 902, and the display unit 903 execute the program or the instructions, the second device 900 shown in FIG. 9 is enabled to perform the data synchronization method in the foregoing method embodiments.

For technical effect of the second device 900 shown in FIG. 9, refer to the technical effect of the data synchronization method in the foregoing method embodiments. Details are not described herein again.

In addition to a form of the second device 900, the technical solutions provided in this application may also be a functional unit or a chip in the second device, or an apparatus that is matched with the second device for use.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in a memory.

Optionally, there may be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using an integrated logic circuit of hardware in a processor or instructions in a form of software. The steps of the method disclosed with reference to embodiments of this application may be directly performed by a hardware processor, or may be performed by using a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the data synchronization method in the foregoing embodiments.

An embodiment of this application further provides a computer program product. When the computer program product runs on a computer, the computer is enabled to perform the foregoing related steps, to implement the data synchronization method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the data synchronization method in the foregoing method embodiments.

The apparatus, the computer-readable storage medium, the computer program product, or the chip provided in embodiments of this application are all configured to perform the corresponding method provided above. Therefore, for beneficial effect that can be achieved, refer to beneficial effect in the corresponding method provided above, and details are not described herein again.

Methods or algorithm steps described in combination with the content disclosed in embodiments of this application may be implemented by hardware, or may be implemented by a processor by executing a software instruction. The software instructions may include a corresponding software module. The software module may be stored in a random access memory (random access memory, RAM), a flash memory, a read-only memory (read-only memory, ROM), an erasable programmable read only memory (erasable programmable ROM, EPROM), an electrically erasable programmable read only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

The foregoing descriptions about implementations allow a person skilled in the art to clearly understand that, for the purpose of convenient and brief description, division of the foregoing functional modules is used as an example for description. In actual application, the foregoing functions can be allocated to different functional modules and implemented based on a requirement, that is, an inner structure of an apparatus is divided into different functional modules to implement all or some of the functions described above. For a detailed working procedure of the foregoing system, apparatus, and unit, refer to a corresponding process in the foregoing method embodiments. Details are not described herein again.

In the several embodiments provided in this application, it should be understood that the disclosed methods may be implemented in other manners. The apparatus embodiments described above are merely examples. For example, the module or unit division is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the modules or units may be implemented in electronic, mechanical, or other forms.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

The computer-readable storage medium includes but is not limited to any one of the following: any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data synchronization system, wherein the system comprises a first device and a second device, wherein
the first device is configured to:
after determining that data of a first application is changed, record, in a first data status change table, that a data status of the first application has been changed, wherein the first application and a second application are installed on the first device, and the first data status change table is used to record data status change situations of the first application and the second application; and
send the first data status change table to the second device; and
the second device is configured to:
receive the first data status change table; and
synchronize the data of the first application with the first device based on the first data status change table.

2. The system according to claim 1, wherein
the second device is further configured to:
after detecting an operation that a user indicates to start the first application, obtain the first data status change table, wherein the first application is installed on the second device;
determine, based on the data status change situation of the first application that is recorded in the first data status change table, that the first device has changed the data of the first application;
send a data synchronization request to the first device; and
after synchronizing the data of the first application with the first device, display the first application.

3. The system according to claim 1 or 2, wherein the first device stores a propagation record table, and the propagation record table is used to record a sending status of the first data status change table.

4. The system according to claim 3, wherein the system further comprises a third device; and
the first device is further configured to:
determine that the third device goes online;
determine, based on the propagation record table, that the first data status change table is not sent to the third device; and
send the first data status change table to the third device.

5. The system according to any one of claims 1 to 4, wherein
the second device is further configured to:
modify the received first data status change table, wherein a modified first data status change table indicates that the data of the first application has been synchronized.

6. A data synchronization method, applied to a first device, wherein a first application and a second application are installed on the first device, and the method comprises:
determining that data of the first application is changed;
in response to the change of the data of the first application, recording, in a first data status change table, that a data status of the first application has been changed, wherein the first data status change table is used to record data status change situations of the first application and the second application; and
sending the first data status change table to a second device.

7. The method according to claim 6, wherein the first device stores a propagation record table, and the propagation record table is used to record a sending status of the first data status change table.

8. The method according to claim 7, wherein the method further comprises:
determining that a third device goes online;
determining, based on the propagation record table, that the first data status change table is not sent to the third device; and
sending the first data status change table to the third device.

9. The method according to claim 7 or 8, wherein the method further comprises:
determining that the data of the first application is changed, and recording, in a second data status change table, that the data status of the first application has been changed;
sending the second data status change table to the second device;
determining that a fourth device goes online;
determining, based on the sending status of the first data status change table of a first version number and a sending status of the second data status change table of a second version number that are recorded in the propagation record table, that the first data status change table and the second data status change table are not sent to the fourth device;
generating a third data status change table based on data status change situations recorded in the first data status change table and the second data status change table; and
sending the third data status change table to the fourth device.

10. The method according to any one of claims 7 to 9, wherein the method further comprises:
determining that the data of the first application is changed, and recording, in a fourth data status change table, that the data status of the first application has been changed;
determining that a first period for sending a data status change table does not arrive, and storing the fourth data status change table;
determining that the data of the first application is changed, and recording, in a fifth data status change table, that the data status of the first application has been changed;
determining that the first period for sending a data status change table has arrived, and integrating the fourth data status change table and the fifth data status change table to generate a sixth data status change table; and
sending the sixth data status change table to the second device, and recording a sending status of the sixth data status change table of a third version number in the propagation record table.

11. The method according to any one of claims 6 to 10, wherein the method further comprises:
determining that a preset condition is met, and deleting the first data status change table, wherein the preset condition comprises one or more of the following: no data status change table is deleted within preset time, memory usage of a stored data status change table exceeds a preset threshold, or an unsent data status change table indicates that data of all applications in the first device has been changed.

12. The method according to any one of claims 6 to 11, wherein the first data status change table is a one-dimensional information matrix, and each bit in the first data status change table corresponds to a data status change situation of one application.

13. The method according to claim 12, wherein in the first data status change table, a bit with a value of 1 indicates that a data status of a corresponding application has been changed, and a bit with a value of 0 indicates that a data status of a corresponding application is not changed.

14. The method according to any one of claims 6 to 13, wherein the sending the first data status change table to a second device comprises:
sending the first data status change table to the second device in a preset manner, wherein the preset manner comprises link establishment, heartbeat broadcast, or discovery broadcast.

15. A data synchronization method, applied to a second device, wherein the method comprises:
detecting an operation that a user indicates to start a first application, and obtaining a first data status change table corresponding to a first device;
determining, based on a data status change situation of the first application that is recorded in the first data status change table, that the first device has changed data of the first application;
sending a data synchronization request to the first device;
synchronizing the data of the first application with the first device; and
displaying the first application.

16. The method according to claim 15, wherein the method further comprises:
modifying the first data status change table, wherein a modified first data status change table indicates that the data of the first application has been synchronized.

17. The method according to claim 15 or 16, wherein the method further comprises:
receiving a second data status change table; and
integrating application data change situations of the first device that are indicated in the first data status change table and the second data status change table.

18. The method according to claim 17, wherein the method further comprises:
receiving a third data status change table; and
determining that a version number of the third data status change table is the same as a version number of the second data status change table, and discarding the third data status change table.

19. The method according to claim 15 or 16, wherein the method further comprises:
determining that all changed application data of the first device that is indicated in the first data status change table has been synchronized; and
deleting the first data status change table.

20. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 6 to 14.

21. An electronic device, comprising a processor, a memory, and a display, wherein the memory and the display are coupled to the processor, the memory is configured to store computer program code, the computer program code comprises computer instructions, and when the processor reads the computer instructions from the memory, the electronic device is enabled to perform the method according to any one of claims 15 to 19.

22. A computer-readable storage medium, wherein the computer-readable storage medium comprises a computer program, and when the computer program is run on an electronic device, the electronic device is enabled to perform the method according to any one of claims 6 to 14, or the electronic device is enabled to perform the method according to any one of claims 15 to 19.

23. A computer program product, wherein when the computer program product runs on a computer, the computer is enabled to perform the method according to any one of claims 6 to 14, or the computer is enabled to perform the method according to any one of claims 15 to 19.
